# EUROPÄISCHE PATENTANMELDUNG

(11) **EP 4 811 117 A1**
(43) Veröffentlichungstag der Anmeldung: **23.09.2026**
(21) Anmeldenummer: 26163143.6
(22) Anmeldetag: 09.03.2026
(51) Int. Cl.: G06F 8/51, G05B 19/042

(54) **COMPUTERIMPLEMENTIERTES VERFAHREN ZUM BETREIBEN EINER ANWENDUNG**

(30) Priorität: 18.03.2025 DE 102025110420
(71) Anmelder: Voraus robotik GmbH, 30455 Hannover (DE)
(72) Erfinder: Beckmann, Lukas, 30165 Hannover (DE); Brockmann, Jan Thieß, 30167 Hannover (DE); Garbe, Keno, 30171 Hannover (DE)
(74) Vertreter: Holz, Christian

(57) **Zusammenfassung**

Die vorliegende Erfindung betrifft ein computerimplementiertes Verfahren zum Betreiben einer Anwendung (1, 2, 3), wobei die Anwendung (1, 2, 3) wenigstens ein Gerät (1; 2) aufweist, wobei das Verfahren wenigstens die Schritte aufweist:
• Bereitstellen (200) einer Gerätebeschreibung des Geräts (1; 2) in einer nicht-echtzeitfähigen Allzweck-Programmiersprache,
• Definieren (300) eines Programmablaufs mittels wenigstens der Gerätebeschreibung des Geräts (1; 2) mit der nicht-echtzeitfähigen Allzweck-Programmiersprache und
• Überführen (400) des definierten Programmablaufs in eine interpretierbare echtzeitfähige anwendungsspezifische Programmiersprache.

## Beschreibung

Die vorliegende Erfindung betrifft ein computerimplementiertes Verfahren zum Betreiben einer Anwendung, ein entsprechendes Computerprogramm, ein entsprechendes computerlesbares Speichermedium sowie eine entsprechende Anwendung.

In der industriellen Produktion ist es seit langem ein Ziel, die Produktionsprozesse bzw. die hierfür erforderlichen Produktionsanlagen und -vorrichtungen immer weiter zu automatisieren und somit möglichst selbsttätig, d.h. mit möglichst wenig erforderlicher Unterstützung sowie mit möglichst wenig erforderlichen Eingriffen von Personen, ablaufen zu lassen. Gleichzeitig soll die Sicherheit der Produktionsprozesse bzw. Produktionsanlagen und -vorrichtungen gewährleistet werden bzw. bleiben.

Entsprechend hat vor längerer Zeit die Automatisierungstechnik Einzug in die industrielle Produktion erhalten, um dort technische Vorgänge in Maschinen, Anlagen oder technischen Systemen als industrielle Anwendungen zu automatisieren. Hierzu gehört die Erfassung von Signalen bzw. das Messen von Prozessgrößen mittels Sensoren sowie von den Komponenten der Maschinen, Anlagen bzw. technischen Systemen selbst, welche mittels Steuerungseinheiten verarbeitet und genutzt werden können, Informationen an Personen auszugeben sowie Aktoren bzw. Antriebe der Maschine, der Anlage oder des technischen Systems zu steuern. Der automatisierte Betrieb der Maschine, der Anlage bzw. des technischen Systems kann gesteuert oder geregelt erfolgen. Dabei ist der Automatisierungsgrad einer Maschine, einer Anlage bzw. eines technischen Systems umso höher, je unabhängiger die Maschine, die Anlage bzw. das technische System von menschlichen Eingriffen sein soll.

Zur Steuerung oder Regelung derartiger automatisierter Maschinen, Anlagen bzw. technischer Systeme werden seit langem speicherprogrammierbare Steuerungen (SPS), im Englischen als programmable logic controller (PLC) bezeichnet, verwendet, welche üblicherweise wenigstens Eingänge für Eingaben seitens einer Person als Benutzer sowie für die Sensoren und dergleichen, Ausgänge zur Ausgabe von Informationen an den Benutzer sowie an die Aktoren und dergleichen, ein Betriebssystem (Firmware) und eine Schnittstelle zum Laden eines Anwenderprogramm zur Ausführung der jeweiligen Aufgabe aufweisen.

Wurden speicherprogrammierbare Steuerungen zunächst durch spezielle Hardware-Komponenten umgesetzt, welche üblicherweise in Schaltschränken verbaut wurden, so kommen zunehmend Personalcomputer (PCs) zum Einsatz, wie sie grundsätzlich auch im Büro eingesetzt werden, jedoch robuster gegenüber Umwelteinflüssen oder elektromagnetischen Störungen und insgesamt weitgehend ausfallsicher ausgelegt sind. Derartige Personalcomputer werden als Industrie-PCs (IPC) bezeichnet und insbesondere für Aufgaben im Bereich Prozessvisualisierung, Robotik, Industrieautomation, autonomes Fahren, Test- und Prüfstände für die Industrie oder Sicherheitstechnik sowie für die Qualitätssicherung eingesetzt.

Ferner geht die Entwicklung in der Automatisierungstechnik schon seit längerem dahin, die automatisierten technischen Vorgänge in Maschinen, Anlagen oder technischen Systemen in Echtzeit ablaufen zu lassen. Hierunter ist zu verstehen, dass die elektronische Datenverarbeitung der speicherprogrammierbaren Steuerung in der Lage sein muss, Echtzeit-Anforderungen der Anwendungen zu erfüllen, d.h. innerhalb einer im Voraus bestimmbaren Frist Anfragen eines Anwendungsprogramms oder das Eintreffen von Signalen über Hardware-Schnittstellen gesichert verarbeiten zu können. Dies gilt vergleichbar für Industrie-PCs, siehe hier weiter unten. Entscheidend ist hier nicht die Länge der Frist, sondern dass es überhaupt eine Frist gibt, deren Einhaltung zugesichert werden kann. Dies kann insbesondere für Sicherheitsfunktionen entscheidend sein, beispielsweise um einen Not-Stopp eines Antriebs oder eines ganzen Knickarmroboters innerhalb einer sehr kurzen Frist sicherstellen zu können, falls die Anwesenheit einer Person sensorisch in einem Sicherheitsbereich erkannt wird, um ein Verletzungsrisiko für Personen möglichst auszuschließen.

Neben der Verwendung eines Echtzeitbetriebssystems (Englisch: real-time operating system (RTOS)) seitens der Steuerungseinheit der speicherprogrammierbaren Steuerung bzw. des Industrie-PCs sind heutzutage auch echtzeitfähige Feldbusssysteme wie beispielsweise EtherCAT (Ethernet for Control Automation Technology) bekannt, um auch die Signal- und Informationsübertragung beispielsweise zwischen den Sensoren und Aktoren mit der Steuerungseinheit der speicherprogrammierbaren Steuerung bzw. des Industrie-PCs innerhalb entsprechender Fristen zu gewährleisten. Dies gilt vergleichbar für andere echtzeitfähige Komponenten wie beispielsweise ein weiterer Industrie-PC oder eine weitere speicherprogrammierbare Steuerung.

In jedem Fall erfolgt die Umsetzung der Anwenderprogramme zur Ausführung der jeweiligen Aufgabe einer speicherprogrammierbaren Steuerung bisher üblicherweise in einer anwendungsspezifischen Programmiersprache, welche auch als domänenspezifische Programmiersprache (Englisch: domain-specific language, DSL) bezeichnet wird. Die anwendungsspezifische Sprache, Programmiersprache bzw. Computersprache dient der Interaktion zwischen der Person als Benutzer bzw. als Anwender oder als Programmierer und der Steuerungseinheit für ein bestimmtes Problemfeld als Domäne, für welches die anwendungsspezifische Sprache gezielt entworfen und implementiert wurde. Auf diese Art und Weise kann üblicherweise ein hoher Grad an Problemspezifität seitens einer anwendungsspezifischen Sprache erreicht werden. Wird eine anwendungsspezifische Sprache für eine industrielle Anwendung ausgelegt, so kann diese anwendungsspezifische Sprache als industrielle anwendungsspezifische Sprache (Englisch: industrial domain-specific language, industrial DSL) bezeichnet werden.

Vorteilhaft ist somit bei der Verwendung von anwendungsspezifischen Sprachen, dass diese gezielt auf ein Problemfeld zugeschnitten und somit hinsichtlich ihrer Funktionen für dieses Problemfeld optimiert sind sowie entsprechend viele für dieses Problemfeld nützliche Funktionen aufweisen können. Dies kann für den Anwender als Spezialist für dieses Problemfeld den Vorteil bieten, kein besonderes Zusatzwissen zur Bedienung bzw. zur Nutzung der anwendungsspezifischen Sprache zu benötigen.

Nach der EN 61131-3 (auch IEC 1131 bzw. IEC 61131) als einzig weltweit gültige Norm für Programmiersprachen von speicherprogrammierbaren Steuerungen sind lediglich die folgenden fünf anwendungsspezifischen Sprachen für speicherprogrammierbare Steuerungen zulässig:
- Anweisungsliste (AWL; Englisch: Instruction List, IL)
- Kontaktplan (KOP; Ladder Diagram, LD)
- Funktionsbaustein-Sprache (FBS; Function Block Diagram, FBD)
- Ablaufsprache (AS; Sequential Function Chart; SFC)
- Strukturierter Text (ST; Structured Text; ST)

Während die Sprachen "Anweisungsliste" und "strukturierter Text" textbasiert sind, werden die Sprachen "Kontaktplan", "Funktionsbaustein-Sprache" und "Ablaufsprache" grafisch dargestellt. In jedem Fall können Funktionen und Funktionsblöcke verwendet werden, welche in einer der anderen Sprachen geschrieben oder vom Hersteller der speicherprogrammierbaren Steuerung in Form von Software-Bibliotheken ohne Quelltext zur Verfügung gestellt werden.

Nachteilig ist jedoch bei anwendungsspezifischen Sprachen, dass diese lediglich auf das jeweilige spezifische Problemfeld anwendbar bzw. dort nutzbar sind. Für andere Anwendungen sind anwendungsspezifische Sprachen daher üblicherweise weniger geeignet. Auch werden üblicherweise Experten als Programmierer von anwendungsspezifischen Sprachen benötigt, da die Funktionen einer anwendungsspezifischen Sprachen sehr vielfältig aber immer auf das Problemfeld spezialisiert sind, was ein entsprechendes Expertenwissen zur Nutzung erfordert. Entsprechende Experten können jedoch rar und somit teuer sein.

Das Gegenteil einer anwendungsspezifischen Sprache stellt daher eine Allzweck-Programmiersprache (Englisch: General-purpose programming language, GPL) dar, welche auch als Mehrzwecksprache oder als Universalsprache bezeichnet werden kann. Eine Allzweck-Programmiersprache ist somit für viele Anwendungsfälle bzw. für viele verschiedene Problemstellungen anwendbar. Mit einer Allzweck-Programmiersprache kann grundsätzlich jedes berechenbare Problem gelöst werden. Beispiele für Allzweck-Programmiersprachen sind Python, C, C++ sowie Java sowie universell einsetzbare Modellierungssprachen wie UML.

Vorteilhaft ist somit bei Allzweck-Programmiersprachen, dass sie zur Lösung von Problemen in vielen verschiedenen Anwendungsbereichen eingesetzt werden können. Die Allzweck-Programmiersprachen ermöglichen dem Programmierer dabei ein hohes Maß an Freiheit bei der Problemlösung. Auch kann der Programmierer sein bereits bekanntes Wissen hinsichtlich der Allzweck-Programmiersprachen auf neue Problemlösungen anwenden. Entsprechend sind üblicherweise auch ausreichend Programmierer für Allzweck-Programmiersprachen verfügbar, was auch die Kosten für die Programmierung geringhalten kann. Ferner besitzen Allzweck-Programmiersprachen üblicherweise mächtige Abstraktionsmechanismen wie Funktionen, Klassen, Module usw., welche zur Problemlösung beitragen bzw. die Problemlösung vereinfachen können. Allzweck-Programmiersprachen gehören zu den sog. höheren Programmiersprachen.

Alle zuvor betrachteten Programmiersprachen haben dabei gemeinsam, dass sie entweder kompiliert oder interpretiert als Maschinencode ausgeführt werden.

So ist zum einen ein Computerprogramm in Form eines Compilers zu verwenden, um den Quellcode eines Programms einer bestimmten kompilierbaren Programmiersprache in eine Darstellung zu übersetzen, welche von einem Computer als Vorrichtung bzw. als System zur Datenverarbeitung direkt ausgeführt werden kann. Das Ergebnis des Kompilierens stellt somit ein mehr oder weniger direkt ausführbares Programm dar, welches selbst nicht mehr im Sinne der ursprünglichen Programmiersprache lesbar ist, sondern aus Anweisungen in Maschinencode besteht. Die Programmiersprache C++ wird beispielsweise kompiliert.

Zum anderen kann ein Quellcode eines Programms einer bestimmten interpretierbaren Programmiersprache von einem Computerprogramm in Form eines Interpreters als eine Abfolge von Anweisungen direkt ausgeführt werden, wobei das Format der Anweisungen anhand der jeweiligen Programmiersprache vorgegeben ist. Der Interpreter liest dazu eine oder mehrere Quelldateien ein, analysiert diese und führt sie anschließend Anweisung für Anweisung aus, indem er den dafür vorgesehenen Programmcode direkt ausführt. Interpretierte Programme laufen deutlich langsamer als kompilierte Programme, bieten im Allgemeinen jedoch eine bessere Fehleranalyse. Interpretierte Programme sind plattformunabhängig. Die Programmiersprache Python wird beispielsweise interpretiert.

Die US 11 681 502 B2 beschreibt eine industrielle integrierte Entwicklungsumgebung (IDE) zur Unterstützung der Entwicklung der Steuerungsprogrammierung unter Verwendung einer industriellen domänenspezifischen Sprache (DSL), die es ermöglicht, die Steuerungsprogrammierung unter Verwendung einer skriptbasierten Programmiersprache mit auf die industrielle Domäne zugeschnittenen Merkmalen zu schreiben. Hierzu wird ein System zur Entwicklung der industriellen Steuerungsprogrammierung beschrieben, umfassend:
- einen Speicher, der ausführbare Komponenten speichert; und
- einen Prozessor, der operativ mit dem Speicher gekoppelt ist und der die ausführbaren Komponenten ausführt, wobei die ausführbaren Komponenten umfassen:
- eine Editor-Definitionskomponente, die so konfiguriert ist, dass sie DSL-Definitionseingaben empfängt, die Programmiermerkmale einer industriellen DSL definieren, und dass sie einen DSL-Editor so konfiguriert, dass er die Programmiermerkmale auf der Grundlage der DSL-Definitionseingaben unterstützt;
- eine Benutzerschnittstellenkomponente, die so konfiguriert ist, dass sie eine industrielle Steuerungsprogrammierung empfängt, die in Übereinstimmung mit der durch die DSL-Definitionseingabe definierten industriellen DSL formatiert ist, und dass sie als Reaktion auf den Empfang der industriellen Steuerungsprogrammierung eine Programmierrückmeldung wiedergibt, wobei die Benutzerschnittstellenkomponente die Programmierrückmeldung auf der Grundlage der durch die DSL-Definitionseingabe definierten Programmiermerkmale erzeugt; und
- wobei der DSL-Editor so konfiguriert ist, dass er die industrielle Steuerungsprogrammierung kompiliert, um einen industriellen Steuerungscode zu erzeugen, der auf einer industriellen Steuerungsvorrichtung ausführbar ist.

Unter einer integrierten Entwicklungsumgebung (Englisch: integrated development environment (IDE)) ist dabei eine Sammlung von Computerprogrammen zu verstehen, mit denen die Aufgaben der Softwareentwicklung möglichst ohne die Übertragung von Daten bzw. von Informationen zwischen verschiedenen Informationsmedien bearbeitet werden können.

Nachteilig ist bei der IDE der US 11 681 502 B2, dass eine anwendungsspezifische bzw. domänenspezifische Sprache (DSL) verwendet wird, welche zwar auf das Problemfeld zugeschnitten bzw. optimiert sein kann, jedoch die Eigenschaften und Vorteile einer Allzweck-Programmiersprache wie zuvor beschrieben nicht genutzt werden können. Dies schränkt auch nachteiligerweise die Integrationsmöglichkeit der IDE der US 11 681 502 B2 ein, da aufgrund der Verwendung einer domänenspezifischen Sprache (DSL) externe Informationsquellen wie Datenbanken, ein Enterprise-Resource-Planning (ERP) und dergleichen nicht eingebunden bzw. nicht genutzt werden können.

Nachteilig ist hierbei weiterhin, dass aufgrund des Kompilierens des erstellten Programms der industriellen Steuerungsprogrammierung ein Testen und eine Fehlerbehebung (Englisch: Debugging) vergleichsweise aufwendig ist, insbesondere bei größeren bzw. komplexeren Anwendungen, da nach einer Änderung des erstellten Programms ein erneutes Kompilieren sowie Laden auf die entsprechende Steuerungseinheit beispielsweise der Maschine, der Anlage oder des technischen Systems erfolgen muss, um das geänderte Programm erneut zu testen. Entsprechend sind auch keine dynamischen bzw. Online-Anpassungen möglich.

Nachteiligerweise schränkt dies auch die Flexibilität der Anwendung wie beispielsweise der Nutzung der Maschine, der Anlage bzw. des technischen Systems als industrielle Anwendung, welche mit der industriellen Steuerungsprogrammierung betrieben werden soll, ein, da der Aufwand für jede Änderung der industriellen Anwendung zu einem entsprechenden Aufwand führen und entsprechend Zeit kosten kann. Dieser Nachteil kommt um so deutlicher zum Tragen, desto kleiner die Losgrößen bzw. Stückzahlen sind, welche mittels der industriellen Anwendung produziert werden sollen.

Nachteilig ist bei der anwendungsspezifischen Sprache der IDE der US 11 681 502 B2 ferner, dass diese erst kompiliert werden muss, so dass die entsprechenden Eigenschaften und Vorteile nicht genutzt werden können.

Nachteilig ist bei speicherprogrammierbaren Steuerungen allgemein, dass auf einer speicherprogrammierbaren Steuerung nicht alle heutzutage notwendigen Anwendungen ausgeführt werden bzw. laufen können. Zum Beispiel werden für Kamerasysteme, Datenbankanbindungen, etc. häufig zusätzlich zur speicherprogrammierbaren Steuerungen auch Industrie-PCs verwendet. Dies führt zu erhöhten Kosten, da sowohl speicherprogrammierbare Steuerungen als auch Industrie-PCs angeschafft, installiert und konfiguriert sowie betrieben werden müssen. Auch werden bei der Verwendung von speicherprogrammierbaren Steuerungen noch weitere Programme auf dem Entwicklungs-PC, welcher der Konfiguration der speicherprogrammierbaren Steuerung dient, wie beispielsweise das "Totally Integrated Automation Portal" (TIA Portal) benötigt, welche weitere Kosten verursachen.

Neben den zuvor beschriebenen industriellen Anwendungen gilt dies vergleichbar für weitere Anwendungen wie beispielsweise für die Service-Robotik oder in der Prozesstechnik.

Eine Aufgabe der vorliegenden Erfindung ist es, eine Möglichkeit zur echtzeitfähigen Steuerung und bzw. oder zur echtzeitfähigen Regelung einer Anwendung der eingangs beschriebenen Art unter Verwendung einer interpretierbaren Allzweck-Programmiersprache, welche nicht echtzeitfähig ist, bereitzustellen. Dies soll insbesondere für industrielle Anwendungen, insbesondere für eine Maschine, für eine Anlage und bzw. oder für ein technisches System, oder für Anwendungen im Bereich Service-Robotik oder Prozesstechnik erfolgen können. Insbesondere soll die Integrationsfähigkeit für andere Systeme, vorzugsweise für ERP-Systeme, für Bildverarbeitungssysteme und bzw. oder für Datenbanken, verbessert werden. Zusätzlich oder alternativ soll der Aufwand für die Inbetriebnahme, insbesondere für das Testen und für die Fehlersuche, und bzw. oder für die Wartung reduziert werden. Zumindest soll eine Alternative zu den bekannten Möglichkeiten geschaffen werden.

Die Aufgabe wird erfindungsgemäß durch ein computerimplementiertes Verfahren, durch ein Computerprogramm, durch ein computerlesbares Speichermedium sowie durch eine Anwendung mit den Merkmalen der unabhängigen Patentansprüche gelöst. Vorteilhafte Weiterbildungen sind in den Unteransprüchen beschrieben.

Somit betrifft die vorliegende Erfindung ein computerimplementiertes Verfahren zum Betreiben einer Anwendung, wobei die Anwendung wenigstens ein Gerät aufweist. Die Anwendung kann eine jegliche geeignete Anwendung wie insbesondere eine industrielle Anwendung oder auch eine Anwendung in der Service-Robotik oder in der Prozesstechnik sein. Das Gerät kann insbesondere ein Sensor, ein Aktor, eine Bilderfassungseinheit, eine weitere Steuerungseinheit oder dergleichen sein.

In jedem Fall weist das Verfahren wenigstens die Schritte auf:
- Bereitstellen einer Gerätebeschreibung des Geräts in einer nicht-echtzeitfähigen Allzweck-Programmiersprache,
- Definieren eines Programmablaufs mittels wenigstens der Gerätebeschreibung des Geräts mit der nicht-echtzeitfähigen Allzweck-Programmiersprache und
- Überführen des definierten Programmablaufs in eine interpretierbare echtzeitfähige anwendungsspezifische Programmiersprache.

Unter einer Gerätebeschreibung eines Geräts sind Informationen zu verstehen, welche die technischen Eigenschaften eines Geräts inklusive dessen Schnittstellen, um Daten und insbesondere Prozessgrößen vom Gerät auszulesen und bzw. oder Daten zum Gerät zwecks dessen Beeinflussung bzw. Steuerung zu übertragen, definieren. Die Gerätebeschreibung kann auch die Einbindung des Geräts in die Netzwerktopologie beinhalten. Unter Prozessgrößen sind physikalische Größen zu verstehen, welche aufgrund von Zustandsänderungen des Prozesses entstehen und diese Zustandsänderungen beschreiben.

Der vorliegenden Erfindung liegt die Erkenntnis zugrunde, dass bisher entweder anwendungsspezifische Programmiersprachen (DSL) oder Allzweck-Programmiersprachen (GPL) verwendet werden, um die Geräte von Anwendungen zu betreiben. Dabei steht die Möglichkeit, die Anwendung echtzeitfähig zu betreiben, grundsätzlich nicht bzw. nur mit einem zusätzlichen Aufwand zur Verfügung, so dass die Eigenschaften und Vorteile der Echtzeitfähigkeit häufig ungenutzt bleiben bzw. zu erhöhten Kosten führen. Auch weist die Verwendung von kompilierten Programmabläufen Nachteile auf, wie zuvor bereits beschrieben.

Erfindungsgemäß erfolgt die Erstellung eines Programmablaufs, welcher dann zum Betreiben der Anwendung genutzt werden kann, daher derart, dass die Vorteile einer Allzweck-Programmiersprache genutzt werden, um die Gerätebeschreibung des Geräts bzw. um jeweils eines Gerätebeschreibung eines Geräts von mehreren Geräten der Anwendung zur Definition eines Programmablaufs in der Allzweck-Programmiersprache zu verwenden. Anschließend wird dieser definierte Programmablauf in eine anwendungsspezifische Programmiersprache überführt, um bei der Ausführung dann die Vorteile einer anwendungsspezifischen Programmiersprache allgemein bzw. der jeweiligen zur Anwendung passenden anwendungsspezifischen Programmiersprache zu nutzen.

Vorteilhaft bei der erfindungsgemäßen Verwendung einer Allzweck-Programmiersprache ist, dass externe Informationsquellen wie Datenbanken, ein Enterprise-Resource-Planning (ERP) und dergleichen eingebunden bzw. genutzt werden können. So können mit einer Allzweck-Programmiersprache theoretisch alle existierenden externen Systeme angebunden werden, und nicht nur diejenigen, die für die jeweilige domänenspezifischen Sprache existieren. Als nicht-echtzeitfähigen Allzweck-Programmiersprache kann insbesondere Python verwendet werden.

Gleichzeitig kann eine Allzweck-Programmiersprache verwendet werden, welche nicht echtzeitfähig und damit einfacher bzw. kostengünstiger sein kann. Dennoch kann die Ausführung des definierten Programmablaufs dann in einer echtzeitfähigen Umgebung erfolgen, indem der definierte Programmablauf in eine echtzeitfähige anwendungsspezifische Programmiersprache überführt wird.

Ferner können bei der Ausführung des definierten Programmablaufs die Eigenschaften und Vorteile einer interpretierbaren Programmiersprache genutzt werden, indem der definierte Programmablauf in eine interpretierbare anwendungsspezifische Programmiersprache überführt wird. Dies kann den Aufwand für die Inbetriebnahme, insbesondere für das Testen und für die Fehlersuche, und bzw. oder für die Wartung der Anwendung reduzieren.

Der überführte Programmablauf kann anschließend direkt verwendet bzw. ausgeführt werden, wie nachfolgend noch näher beschrieben werden wird, so dass eine Zwischenspeicherung in einem Prozessor eines Computers der Anwendung ausreichend sein kann. Alternativ oder zusätzlich kann der überführte Programmablauf auch auf einem computerlesbaren Speichermedium gespeichert und später von dort in einen Prozessor eines Computers der Anwendung geladen werden, um dann ausgeführt zu werden.

In jedem Fall kann das erfindungsgemäße Verfahren mit allen Schritten auf einem Prozessor eines Computers der Anwendung ausgeführt werden, was die Umsetzung vereinfachen und beschleunigen kann. Alternativ können einzelne Schritte des erfindungsgemäßen Verfahrens auch auf den Prozessoren mehrerer Computer ausgeführt bzw. umgesetzt werden, was die räumliche Flexibilität erhöhen kann. In diesem Fall können die erforderlichen Daten zwischen den beteiligten Computern übertragen werden.

Gemäß einem Aspekt der Erfindung weist das Verfahren ferner wenigstens die vorangehenden Schritte auf:
- Identifizieren des Gerätes und
- Generieren der Gerätebeschreibung des Gerätes in der nicht-echtzeitfähigen Allzweck-Programmiersprache.

Dabei kann das Identifizieren des Geräts durch eine Abfrage bzw. durch ein Auslesen von Informationen des Geräts erfolgen, welche ein Identifizieren ermöglichen können. In jedem Fall kann dann ein Generieren der jeweiligen Gerätebeschreibung erfolgen, um diese dann bereitstellen und zum Definieren des Programmablaufs wie zuvor beschrieben verwenden zu können. Auch die Einbindung in die Netzwerktopologie kann Teil des Generierens der Gerätebeschreibung sein. Im Falle von mehreren Geräten kann das Identifizieren und Generieren jeweils erfolgen.

Gemäß einem weiteren Aspekt der Erfindung weist das Verfahren ferner wenigstens den anschließenden bzw. vorangehenden Schritt auf:
- Erstellen einer Softwarekomponente der generierten Gerätebeschreibung des Gerätes.

Somit kann die generierte Gerätebeschreibung des Gerätes dazu verwendet werden, diese Information zur Erstellung einer Softwarekomponente bzw. einer Routine zu verwenden. Auf diese Art und Weise kann die Gerätebeschreibung des Gerätes in einer Softwareumgebung dargestellt und verwendet werden. Mehrere Softwarekomponenten bzw. Routinen der Gerätebeschreibungen mehrerer Geräte können auch als Bibliothek bzw. Programmbibliothek zusammengefasst werden.

Gemäß einem weiteren Aspekt der Erfindung erfolgt das Überführen des definierten Programmablaufs in die echtzeitfähige anwendungsspezifische Programmiersprache als ein Serialisieren.

Unter einem Serialisierung ist eine Abbildung von strukturierten Daten auf eine sequenzielle Darstellungsform zu verstehen. Dies kann eine konkrete Möglichkeit darstellen, das besagte Überführen umzusetzen und damit die Eigenschaften und Vorteile des Serialisierens zu nutzen.

Gemäß einem weiteren Aspekt der Erfindung weist das Verfahren ferner wenigstens die weiteren Schritte auf:
- Speichern des überführten Programmablaufs und
- Laden des überführten Programmablaufs in die echtzeitfähige Umgebung.

Auf diese Art und Weise kann der überführte Programmablauf erstellt und dann zur späteren Verwendung bzw. zur Übertragung gespeichert werden, was auf einem computerlesbaren Speichermedium erfolgen kann, wie nachfolgend noch näher erläutert werden wird.

Gemäß einem weiteren Aspekt der Erfindung weist das Verfahren ferner wenigstens den anschließenden Schritt auf:
- Ausführen des überführten Programmablaufs innerhalb einer echtzeitfähigen Umgebung mittels eines Interpreters.

Dies kann die Ausführung bzw. Nutzung des überführten Programmablaufs seitens der Anwendung ermöglichen. Dabei können die Eigenschaften und Vorteile einer Echtzeit-Umgebung zur Steuerung bzw. zur Regelung der Anwendung genutzt werden.

Das Ausführen kann insbesondere auf einem Computer bzw. dessen Prozessor der Anwendung erfolgen. Dort kann der überführte Programmablauf zuvor direkt erstellt worden sein. Alternativ kann der überführte Programmablauf auch zeitlich und bzw. oder räumlich versetzt erstellt und gespeichert worden sein und nun geladen, ggfs. zuvor übertragen, werden, um genutzt zu werden.

Gemäß einem weiteren Aspekt der Erfindung weist das Verfahren, vorzugsweise vor dem Ausführen des überführten Programmablaufs, ferner wenigstens den Schritt auf:
- Auslesen von Daten des Gerätes innerhalb der echtzeitfähigen Umgebung.

Dies kann es ermöglichen, Daten und insbesondere Prozessdaten echtzeitfähig auszulesen und in Echtzeit seitens des überführten Programmablaufs zu verwenden. Hierdurch können die echtzeitfähigen Möglichkeiten der Anwendung um die Nutzung von Daten bzw. von Prozessdaten der Anwendung erweitert werden.

Gemäß einem weiteren Aspekt der Erfindung weist das Verfahren, vorzugsweise nach dem Auslesen von Daten, ferner wenigstens den weiteren Schritt auf:
- Übertragen von Daten in die nicht-echtzeitfähige Umgebung.

Auf diese Art und Weise können in Echtzeit ausgelesene Daten und insbesondere Prozessdaten auch nach außerhalb der Echtzeitumgebung zur Verfügung gestellt werden, um dort genutzt zu werden. Beispielsweise kann dort eine Speicherung, eine Übertragung oder dergleichen der ausgelesenen Daten bzw. Prozessdaten erfolgen.

Gemäß einem weiteren Aspekt der Erfindung weist das Verfahren, vorzugsweise nach dem Ausführen des überführten Programmablaufs, ferner wenigstens den Schritt auf:
- Schreiben der Daten des Gerätes innerhalb der echtzeitfähigen Umgebung.

Somit können die durch das Ausführen des überführten Programmablaufs verarbeiteten Daten und insbesondere Prozessdaten innerhalb der echtzeitfähigen Umgebung zwischengespeichert werden, um dort in einem folgenden Schritt des überführten Programmablaufs verwendet zu werden.

Gemäß einem weiteren Aspekt der Erfindung weist das Verfahren, vorzugsweise nach dem Schreiben der Daten, ferner wenigstens den weiteren Schritt auf:
- Übertragen von Daten aus der nicht-echtzeitfähigen Umgebung.

Auf diese Art und Weise können Daten bzw. Informationen aus der nicht-echtzeitfähigen Umgebung, d.h. sozusagen von außen, in die echtzeitfähige Umgebung übertragen werden, um innerhalb der echtzeitfähigen Umgebung vom überführten Programmablauf bei dessen Ausführung genutzt zu werden.

Gemäß einem weiteren Aspekt der Erfindung weist das Verfahren ferner wenigstens den weiteren Schritt auf:
- Austauschen von Daten aus der nicht-echtzeitfähigen Umgebung mit wenigstens einer externen Informationsquelle, vorzugsweise mit einem ERP-System und bzw. oder einer Datenbank.

Dies kann es ermöglichen, externe Informationsquellen aus der nicht-echtzeitfähigen Umgebung in den ausgeführten überführten Programmablauf innerhalb der echtzeitfähigen Umgebung einzubinden und dort nutzen zu können. Dies kann die Möglichkeiten des überführten Programmablaufs erweitern.

Die vorliegende Erfindung betrifft auch ein Computerprogramm, welches Anweisungen aufweist, welche bei der Ausführung des Computerprogramms durch einen Computer der Anwendung den Computer veranlassen, das Verfahren wie zuvor beschrieben auszuführen.

Auf diese Art und Weise kann das zuvor beschriebene computerimplementiert Verfahren mittels Anweisungen umgesetzt werden, welche als Computerprogramm bzw. als Computerprogrammprodukt einem Computer der besagten Anwendung zur Verfügung gestellt werden, d.h. dort lesbar bzw. ladbar vorhanden sind, beispielsweise in einem Speicher oder auf einem computerlesbaren Speichermedium. Dies kann die Bereitstellung sowie die Übertragung eines Computerprogramms ermögliche, um das erfindungsgemäße Verfahren auf dem Computer einer Anwendung ausführen zu können.

Die vorliegende Erfindung betrifft ferner ein computerlesbares Speichermedium, auf welchem das Computerprogramm wie zuvor beschrieben gespeichert ist.

Das computerlesbare Speichermedium kann ein jeglicher Datenträger, ob in einem Computer als dessen Bestandteil angeordnet, sein, welcher als Speichermedium dienen kann. Beispielsweise kann dies der Datenspeicher wie beispielsweise ein Festplattenlaufwerk des Computers sein, oder auch ein aus dem Computer entnehmbares bzw. von dem Computer trennbares Speichermedium wie beispielsweise eine Diskette, eine Daten-CD bzw. eine Daten-DVD, ein USD-Speicherstick, ein externer Festplattenspeicher und dergleichen. Das Speichermedium kann ein Bestandteil eines Edge- oder Cloud-Rechners sein. In jedem Fall kann auf diese Art und Weise das zuvor beschrieben Computerprogramm gespeichert sowie übertragen bzw. zur Verfügung gestellt werden.

Die vorliegende Erfindung betrifft des Weiteren eine Anwendung mit wenigstens einem Gerät und mit einem Computer, welcher ausgebildet und eingerichtet ist, das Verfahren wie zuvor beschrieben auszuführen. Hierzu kann insbesondere das entsprechende Computerprogramm wie zuvor beschrieben auf dem Computer zur Verfügung stehen, insbesondere dort gespeichert sein.

In jedem Fall kann auf diese Art und Weise eine konkrete Umsetzung bzw. Nutzung des erfindungsgemäßen computerimplementierten Verfahrens erfolgen. Die Anwendung kann eine jegliche geeignete Anwendung wie insbesondere eine industrielle Anwendung oder auch eine Anwendung in der Service-Robotik oder in der Prozesstechnik sein. Das Gerät kann insbesondere ein Sensor, ein Aktor, eine Bilderfassungseinheit oder dergleichen sein.

Ein Ausführungsbeispiel und weitere Vorteile der Erfindung werden nachstehend im Zusammenhang mit den folgenden Figuren rein schematisch dargestellt und näher erläutert. Darin zeigt:
- Figur 1: eine Darstellung einer erfindungsgemäßen Anwendung; und
- Figur 2: ein Ablaufdiagramm eines erfindungsgemäßen Verfahrens.

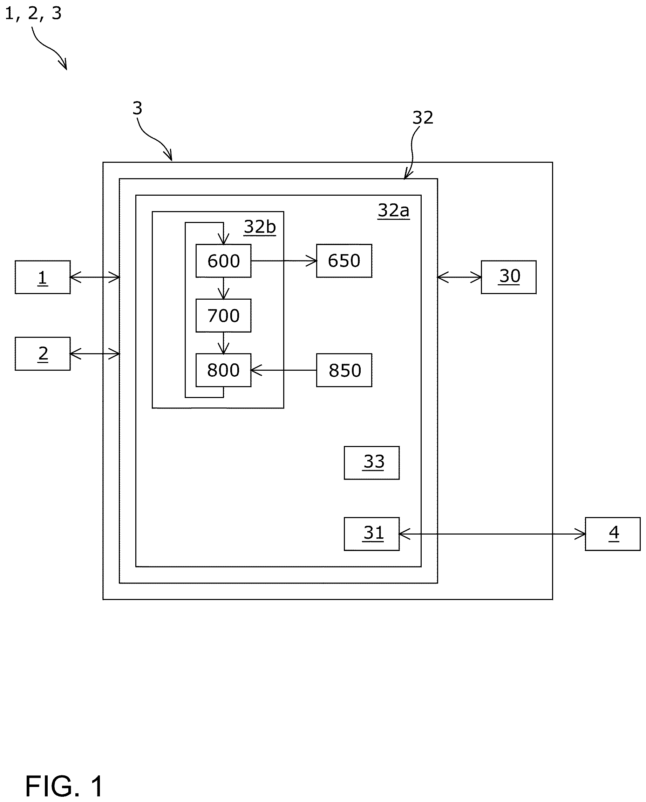

Figur 1 zeigt eine Darstellung einer erfindungsgemäßen Anwendung 1, 2, 3. Die beispielhaft betrachtete Anwendung 1, 2, 3 ist eine industrielle Anwendung 1, 2, 3, welche eine Maschine 1, 2, 3, eine Anlage 1, 2, 3 oder ein technisches System 1, 2, 3 darstellen kann.

Die betrachtete industrielle Anwendung 1, 2, 3 weist ein erstes Gerät 1 in Form eines Sensors 1, ein zweites Gerät 2 in Form eines Aktors 2 sowie einen Computer 3 auf, welcher eine Vorrichtung 3 bzw. ein System 3 zur Datenverarbeitung repräsentiert. Der Computer 3 ist als industrieller PC 3 umgesetzt. Funktionell kann der Computer 3 auch als Steuerungseinheit 3 der industriellen Anwendung 1, 2, 3 betrachtet werden.

Der Computer 3 weist einen Speicher 30 in Form eines Festplattenspeichers 30 auf, welcher dort gespeicherte Daten und Programme einem Prozessor 32 zur Verfügung stellt. Auch kann der Prozessor 32 Daten in dem Speicher 30 ablegen bzw. speichern sowie dort befindliche Daten verändern. Der Computer 3 weist auch Schnittstellen 31 in Form von Netzwerkschnittstellen 31 auf, welche als OPC UA Server 31 realisiert sein können. Über die Schnittstellen 31 können Daten mit externen Informationsquellen 4 in Form eines ERP-Systems 4 oder einer Datenbank 4 ausgetauscht werden.

Auf dem Prozessor 32 wird im Betrieb eine nicht-echtzeitfähige Umgebung 32a betrieben, welche Softwarekomponente 33 in Form von Routinen 33 sowie die bereits erwähnten Schnittstellen 31 als OPC-UA-Server 31 aufweisen kann. Innerhalb der eine nicht-echtzeitfähige Umgebung 32a wird zusätzlich eine echtzeitfähige Umgebung 32b, welche auch als Echtzeitumgebung 32b bezeichnet werden kann, betrieben.

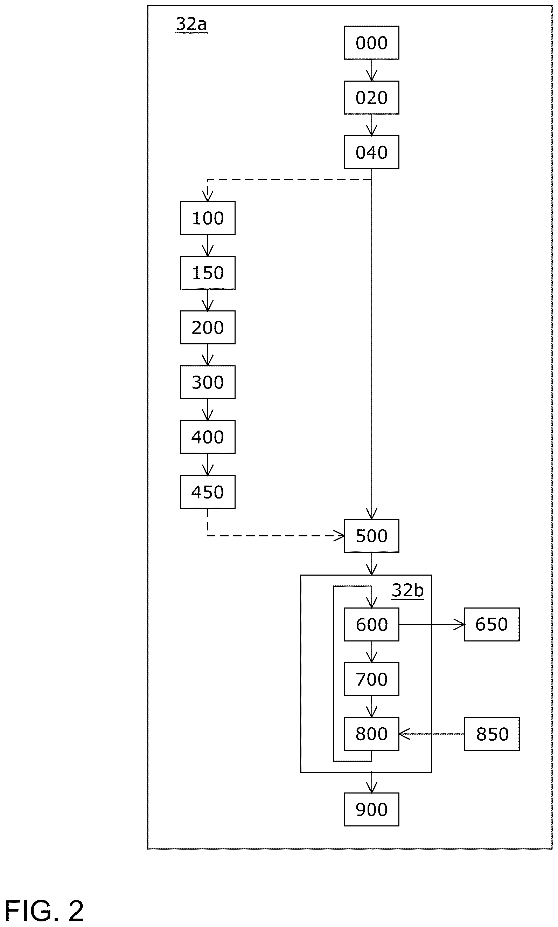

Der Prozessor 32 kann das folgende erfindungsgemäße Verfahren gemäß des Ablaufdiagramms der Figur 2 wie folgt ausführen und hierbei auf den Speicher 30 sowie über die Schnittstellen 31 auf die externen Informationsquellen 4 zugreifen. Ebenso kann der Prozessor 32 Prozessdaten der Geräte 1, 2 als Daten erhalten sowie die Geräte 1, 2 betreiben bzw. steuern.

Es erfolgt zunächst ein Identifizieren 000 der Geräte 1, 2 sowie jeweils ein Generieren 100 einer Gerätebeschreibung für jedes der Geräte 1, 2 in einer nicht-echtzeitfähigen Allzweck-Programmiersprache wie beispielsweise Python in der nicht-echtzeitfähige Umgebung 32a des Prozessors 32. Hierauf basierend erfolgt ein Erstellen 150 einer jeweiligen Softwarekomponente 33 der generierten Gerätebeschreibung jedes Gerätes 1, 2, wobei die erstellten Softwarekomponenten 33 in einer Bibliothek wie beispielsweise Python-Package abgelegt werden können. In jedem Fall resultieren diese Schritte darin, dass ein Bereitstellen 200 von Gerätebeschreibungen von jedem der Geräte 1, 2 in der nicht-echtzeitfähigen Allzweck-Programmiersprache erfolgt.

Nun erfolgt ein Definieren 300 eines Programmablaufs mittels der Gerätebeschreibungen der Geräte 1, 2 mit der nicht-echtzeitfähigen Allzweck-Programmiersprache durch einen Benutzer oder durch ein anderes Programm. Anschließend erfolgt ein Überführen 400 des definierten Programmablaufs in eine interpretierbare echtzeitfähige anwendungsspezifische Programmiersprache. Das Überführen 400 des definierten Programmablaufs in die echtzeitfähige anwendungsspezifische Programmiersprache wird dabei als ein Serialisieren 400 umgesetzt, was beispielsweise im Dateiformat JSON erfolgen kann. Dann erfolgt ein Speichern 450 des überführten Programmablaufs im Speicher 30, um den überführten Programmablauf bei Bedarf nutzen zu können.

Wurde der überführte Programmablauf im Speicher 30 gespeichert, so kann nun zur Nutzung des überführten Programmablaufs ein Laden 500 des überführten Programmablaufs aus dem Speicher 30 in die echtzeitfähige Umgebung 32b erfolgen. Wurde der überführte Programmablauf gerade erzeugt und steht somit noch im Prozessor zur Verfügung, kann auf das Laden 500 verzichtet werden.

In jedem Fall kann nun ein Auslesen 600 von Daten wie insbesondere von Prozessdaten der Geräte 1, 2 innerhalb der echtzeitfähigen Umgebung 32b des Prozessors 32 erfolgen, sodass die Prozessdaten der Geräte 1, 2 für eine Nutzung bzw. Verarbeitung in Echtzeit dort zur Verfügung stehen. Auch kann bei Bedarf ein Übertragen 650 von Daten in die nicht-echtzeitfähige Umgebung 32a des Prozessors 32 erfolgen. Die Daten können dann ggf. über die Schnittstelle 31 zur externen Datenbank 4 übertragen oder von dieser abgefragt werden.

Nun erfolgt ein Ausführen 700 des überführten Programmablaufs innerhalb der echtzeitfähigen Umgebung 32b des Prozessors 32 mittels eines Interpreters. Das Ausführen 700 erfolgt wiederholend bzw. fortlaufend. Auf diese Art und Weise können die Eigenschaften und Vorteile einer nicht-echtzeitfähigen Allzweck-Programmiersprache wie Python, in welcher der Programmablauf definiert wird, und dessen Ausführung in einer interpretierbaren echtzeitfähigen anwendungsspezifischen Programmiersprache miteinander kombiniert werden.

Es kann anschließend ein Schreiben 800 der Prozessdaten der Geräte 1, 2 innerhalb der echtzeitfähigen Umgebung 32b erfolgen, so dass die Prozessdaten gespeichert werden können. Es kann auch ein Übertragen 850 von Daten aus der nicht-echtzeitfähigen Umgebung 32a über die Schnittstellen 31 in die echtzeitfähige Umgebung 32b erfolgen, um diese Daten dort nutzen zu können.

Ferner kann ein Austauschen 900 von Daten aus der nicht-echtzeitfähigen Umgebung 32a mit der externen Informationsquelle 4 erfolgen, um auch diese Möglichkeiten zu nutzen. Darüber hinaus können Daten von der externen Informationsquelle 4 über die Schnittstelle 31 der nicht-echtzeitfähigen Umgebung 32a bereitgestellt oder von dieser angefragt werden.

### BEZUGSZEICHENLISTE (Teil der Beschreibung)

- 1, 2, 3: (industrielle) Anwendung; Maschine; Anlage; technisches System
- 1: erstes Gerät; Sensor
- 2: zweites Gerät; Aktor
- 3: Computer; Vorrichtung bzw. System zur Datenverarbeitung; Steuerungseinheit; industrieller PC
- 30: Speicher; Festplattenspeicher
- 31: Schnittstellen; Netzwerkschnittstellen; OPC-UA-Server
- 32: Prozessor
- 32a: nicht-echtzeitfähige Umgebung
- 32b: echtzeitfähige Umgebung; Echtzeitumgebung
- 33: Softwarekomponente; Routine
- 4: externe Informationsquelle; ERP-System; Datenbank

- 000: Identifizieren eines Gerätes 1; 2
- 020: Initialisieren einer echtzeitfähigen Umgebung 32b
- 040: Initialisieren einer nicht-echtzeitfähigen Umgebung 32a
- 100: Generieren einer Gerätebeschreibung des Gerätes 1; 2 in einer nicht-echtzeitfähigen Allzweck-Programmiersprache
- 150: Erstellen einer Softwarekomponente 33 der generierten Gerätebeschreibung des Gerätes 1; 2
- 200: Bereitstellen der Gerätebeschreibung der Gerätes 1; 2 in der nicht-echtzeitfähigen Allzweck-Programmiersprache
- 300: Definieren eines Programmablaufs mittels der Gerätebeschreibung des Gerätes 1; 2 in einer nicht-echtzeitfähigen Allzweck-Programmiersprache
- 400: Überführen bzw. Serialisieren des definierten Programmablaufs in einer echtzeitfähige anwendungsspezifische Programmiersprache
- 450: Speichern des überführten Programmablaufs
- 500: Laden des überführten Programmablaufs in die echtzeitfähige Umgebung 32b
- 600: Auslesen von Daten des Gerätes 1; 2 innerhalb der echtzeitfähigen Umgebung 32b
- 650: Übertragung von Daten in die nicht-echtzeitfähige Umgebung 32a
- 700: Ausführen des überführten Programmablaufs innerhalb einer echtzeitfähigen Umgebung 32b mittels eines Interpreters
- 800: Schreiben der Daten des Gerätes 1; 2 innerhalb der echtzeitfähigen Umgebung 32b
- 850: Übertragung von Daten aus der nicht-echtzeitfähigen Umgebung 32a
- 900: Austauschen von Daten aus der nicht-echtzeitfähigen Umgebung 32a mit einer externen Informationsquelle 4

## Patentansprüche

1. Computerimplementiertes Verfahren zum Betreiben einer Anwendung (1, 2, 3),
wobei die Anwendung (1, 2, 3) wenigstens ein Gerät (1; 2) aufweist,
wobei das Verfahren wenigstens die Schritte aufweist:
• Bereitstellen (200) einer Gerätebeschreibung des Geräts (1; 2) in einer nicht-echtzeitfähigen Allzweck-Programmiersprache,
• Definieren (300) eines Programmablaufs mittels wenigstens der Gerätebeschreibung des Geräts (1; 2) mit der nicht-echtzeitfähigen Allzweck-Programmiersprache und
• Überführen (400) des definierten Programmablaufs in eine interpretierbare echtzeitfähige anwendungsspezifische Programmiersprache.

2. Verfahren nach Anspruch 1,
ferner mit wenigstens den vorangehenden Schritten:
• Identifizieren (000) des Gerätes (1; 2) und
• Generieren (100) der Gerätebeschreibung des Gerätes (1; 2) in der nicht-echtzeitfähigen Allzweck-Programmiersprache.

3. Verfahren nach Anspruch 1 oder 2,
ferner mit wenigstens dem anschließenden bzw. vorangehenden Schritt:
• Erstellen (150) einer Softwarekomponente (33) der generierten Gerätebeschreibung des Gerätes (1; 2).

4. Verfahren nach einem der vorangehenden Ansprüche,
wobei das Überführen (400) des definierten Programmablaufs in die echtzeitfähige anwendungsspezifische Programmiersprache als ein Serialisieren (400) erfolgt.

5. Verfahren nach einem der vorangehenden Ansprüche,
ferner mit wenigstens den weiteren Schritten:
• Speichern (450) des überführten Programmablaufs und
• Laden (500) des überführten Programmablaufs in die echtzeitfähige Umgebung (32b).

6. Verfahren nach einem der vorangehenden Ansprüche,
ferner mit wenigstens dem anschließenden Schritt:
• Ausführen (700) des überführten Programmablaufs innerhalb einer echtzeitfähigen Umgebung (32b) mittels eines Interpreters.

7. Verfahren nach einem der vorangehenden Ansprüche,
ferner mit wenigstens dem weiteren Schritt, vorzugsweise vor dem Ausführen (700) des überführten Programmablaufs:
• Auslesen (600) von Daten des Gerätes (1; 2) innerhalb der echtzeitfähigen Umgebung (32b).

8. Verfahren nach einem der vorangehenden Ansprüche,
ferner mit wenigstens dem weiteren Schritt, vorzugsweise nach dem Auslesen (600) von Daten:
• Übertragen (650) von Daten in die nicht-echtzeitfähige Umgebung (32a).

9. Verfahren nach einem der vorangehenden Ansprüche,
ferner mit wenigstens dem weiteren Schritt, vorzugsweise nach dem Ausführen (700) des überführten Programmablaufs:
• Schreiben (800) der Daten des Gerätes (1; 2) innerhalb der echtzeitfähigen Umgebung (32b).

10. Verfahren nach einem der vorangehenden Ansprüche,
ferner mit wenigstens dem weiteren Schritt, vorzugsweise nach dem Schreiben (800) der Daten:
• Übertragen (850) von Daten aus der nicht-echtzeitfähigen Umgebung (32a).

11. Verfahren nach einem der vorangehenden Ansprüche,
ferner mit wenigstens dem weiteren Schritt:
• Austauschen (900) von Daten aus der nicht-echtzeitfähigen Umgebung (32a) mit wenigstens einer externen Informationsquelle (4), vorzugsweise mit einem ERP-System (4) und/oder einer Datenbank (4).

12. Computerprogramm, welches Anweisungen aufweist, welche bei der Ausführung des Computerprogramms durch einen Computer (3) der Anwendung (1, 2, 3) den Computer (3) veranlassen, das Verfahren nach einem der vorangehenden Ansprüche auszuführen.

13. Computerlesbares Speichermedium, auf welchem das Computerprogramm nach Anspruch 12 gespeichert ist.

14. Anwendung (1, 2, 3)
mit wenigstens einem Gerät (1; 2) und
mit einem Computer (3), welcher ausgebildet und eingerichtet ist, das Verfahren nach einem der Ansprüche 1 bis 11 auszuführen.
